# EUROPEAN PATENT SPECIFICATION

(11) **EP 3 983 664 B1**
(45) Date of publication and mention of the grant of the patent: **16.08.2023**
(21) Application number: 20733043.2
(22) Date of filing: 09.06.2020
(51) Int. Cl.: F03B 13/00, F16L 41/06

(54) **ASSEMBLY FOR THE GENERATION OF POWER FROM A FLUID FLOW AND INSTALLATION PROCESS FOR SUCH ASSEMBLIES**
ANORDNUNG ZUR ERZEUGUNG VON STROM AUS EINEM FLUIDSTROM UND INSTALLATIONSVERFAHREN FÜR SOLCHE ANORDNUNGEN
ENSEMBLE DESTINÉ À LA PRODUCTION D'ÉNERGIE À PARTIR D'UN ÉCOULEMENT DE FLUIDE ET PROCÉDÉ D'INSTALLATION POUR DE TELS ENSEMBLES

(30) Priority: 11.06.2019 SE 1950692
(43) Date of publication of application: 20.04.2022
(73) Proprietor: Aqua Robur Technologies AB, 412 85 Göteborg (SE)
(72) Inventor: HOLM, Martin, 41669 Göteborg (SE)
(74) Representative: Henricson Briggs, David James
(86) International application number: PCT/SE2020/050581
(87) International publication number: WO 2020/251455

(56) References cited:
- WO-A1-2019/070177
- US-A- 3 948 282
- US-A- 4 631 967
- US-A- 4 809 510
- US-B2- 9 982 652

## Description

### Field of the Invention

The present disclosure relates to assemblies for generating electrical power from a fluid flow. Specifically it relates to assemblies comprising turbine generators and installation methods for installation of such assemblies in fluid conduits.

### Background of the invention

Turbine generators are used to generate electrical energy from mechanical energy. A hydro or water turbine generator converts the energy from a moving flow of water in to electrical energy. For example, a hydroelectric turbine may be positioned downstream from a large dam in a river. Such hydroelectric power generation is normally used to provide energy for communities, such as fed in to a communal power grid. The purpose of such systems is to use as much energy as possible from the flow of water and convert it to electrical energy.

However, smaller hydroelectrical power generation systems may instead be used to provide power to systems which are otherwise difficult to provide with reliable power. For example, measuring of flow velocity, water quality etc. of the water present in communal water systems requires installing devices within pipes deep under the ground in cities or towns. Providing power to such devices requires expensive rerouting of mains electrical cables or the like. Batteries may also be used to power such systems but batteries have a finite lifetime and thus would need to be replaced which leads to increased costs.

A renewable power source provided in the vicinity of the sensor systems themselves would thus be ideal. The size and geometry of such a hydroelectric turbine generator is heavily constrained by the application area. Such existing pipes have only a limited flow, therein only limited energy can be generated from the flow. Techniques and designs for increasing the energy available within the available geometry are thus necessary. Furthermore, the flow should not be significantly disrupted by the turbine generator as this would disrupt the water system.

US9,982,652 B2 (Hydrospin Monitoring Solutions Ltd) describes a system and method of insertion and extraction of a turbine device to a fluid-containing body. The system is designed for repeated insertion and removal of the turbine from the fluid-containing body post initial installation and does not provide a solution for initial installation of a fluid conduit comprising a fluid.

Existing methods of installation of turbine generators in existing fluid conduits involve removing a portion of the fluid conduit and installation of the turbine within a new section of fluid conduit However, such installation processes require the flow of water to be stopped such that the fluid conduit can be cut and the portion removed. This process is costly, time-consuming and may not be available in critical systems such as communal water systems. Improved methods of installation and assemblies for installation in existing fluid conduits under pressure are required.

### Summary of the invention

Accordingly, the present invention preferably seeks to mitigate, alleviate or eliminate one or more of the above-identified deficiencies in the art and disadvantages singly or in any combination and solves at least the above mentioned problems by providing an assembly for generating electrical power from a fluid flow being installable to a fluid conduit comprising a fluid, according to claim 1.

A method of installing an assembly is also provided.

Further advantageous embodiments are disclosed in the appended and dependent patent claims.

### Brief description of the drawings

These and other aspects, features and advantages of which the invention is capable will be apparent and elucidated from the following description of embodiments of the present invention, reference being made to the accompanying drawings, in which
Fig. 1 is a cross-sectional perspective view of an assembly according to an aspect.

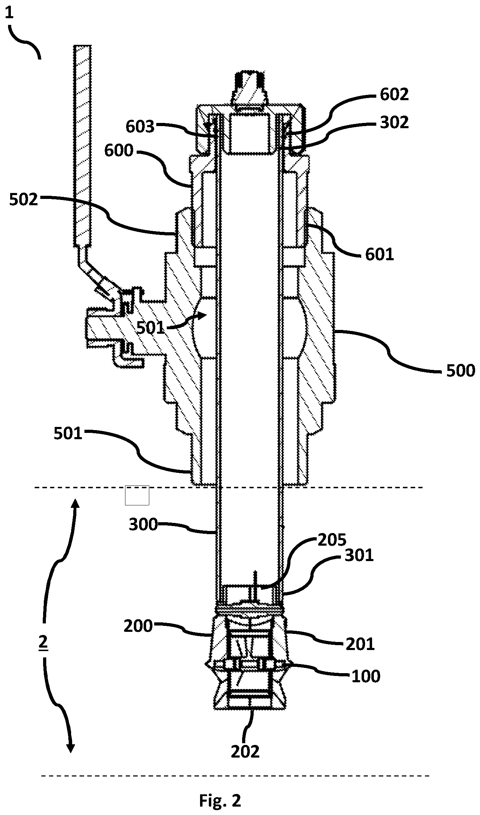

Fig. 2 is a cross-sectional perspective view of an assembly according to an aspect. The assembly is shown in a position whereby the turbine and turbine housing are within the fluid conduit.

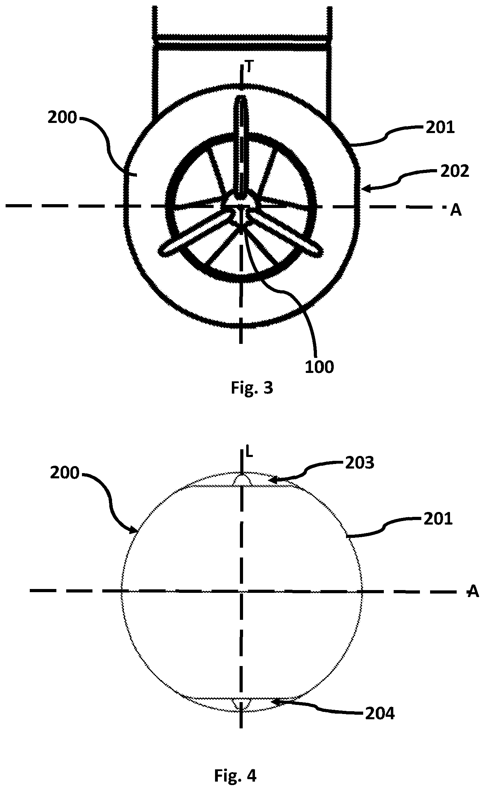

Fig. 3 is a perspective view of a turbine housing and turbine according to an aspect.
Fig. 4 is a perspective bottom view of a turbine housing according to an aspect.
Fig. 5 is a perspective view of a turbine housing and turbine according to an aspect.

### Detailed description

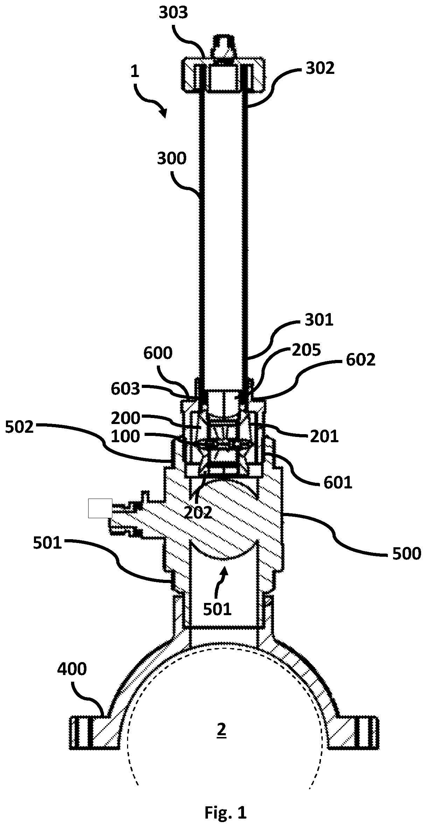

Figure 1 shows an assembly 1 for generating electrical power from a fluid flow through a fluid conduit 2. The assembly 1 comprises a turbine 100 for generating electrical power from the fluid flow. The turbine 100 is provided within a turbine housing 200. The assembly 1 further comprises a connecting member 300 attached to a distal portion 205 of the turbine housing 200. A separate enclosure 600 for connecting to a valve member 500 slidably receives and fluidically seals at the connecting member 300 such that the connecting member 300 may be slid through the enclosure 600. A distal end 302 of the connecting member is provided with a cap 303 which is securable to the enclosure 600. The assembly 1 allows the efficient installation of a power generating turbine in to an existing fluid conduit 2. The assembly 1 is installable at existing fluid conduits 2 and enables the turbine 100 to be installed in fluid conduits 2 via the process known as hot-tapping and does not require a section of the fluid conduit 2 to be removed for installation. The assembly 1 efficiently and reliably locates the turbine 100 within the fluid conduit 2 in the path of fluid flow. The assembly 1 is installable in fluid conduits which comprise a fluid, and is especially advantageous if the fluid conduit comprises a fluid under pressure as it allows hot-tapping of the fluid conduit for installation of the assembly 1.

The turbine 100 and the turbine housing 200 comprise a rotor and stator assembly for generating electrical energy from the flow of fluid past the turbine 100. Generally the turbine 100 comprises the rotor and the turbine housing 200 comprises the stator. The rotor and stator may be constructed as described in WO2019070177 A1 (Aqua Robur Technologies AB). The rotation of the rotor with respect to the stator generates an electrical current in the stator. The electrical power generated by the rotation of the rotor with respect to the stator is used to power external devices attached to the assembly 1, and may power devices provided to the assembly 1.

As stated above, the enclosure 600 is connectable to a valve member 500 for optional sealing/opening of a fluid path from the fluid conduit 2. In some instances the assembly 1 may comprise the valve member 500. The valve member 500 is provided with a closable aperture 501 for receiving the turbine housing 200 and connecting member 300.

The valve member 500 is connectable to a saddle clamp 400 which is securable around a fluid conduit 2. The saddle clamp 400 may secure the assembly 1 to the fluid conduit 2. The valve member 500 is necessarily and always located external or outside of the fluid conduit 2 to allow hot-tapping.

The turbine housing 200 has a longitudinal axis L, a transversal axis T and a lateral axis A. The longitudinal axis L, and therein the length of the turbine housing 200 and turbine 100 is aligned with the direction of fluid flow when the turbine 100 and turbine housing 200 is installed in a fluid conduit 2.

The turbine housing 200 has an outer wall 201 which defines its external geometry. A bottom portion 202 of the housing 200 has an external substantially cylindrical geometry along the longitudinal axis L of the turbine housing 200. The external cylindrical geometry of the bottom portion 202 is defined by the outer wall 201 of the turbine housing 200. The cylindrical geometry improves fluid flow past the turbine housing 200. The bottom portion 202 may be referred to as the proximal portion 202 of the turbine housing 200 as it is the portion proximal the flow of fluid through the fluid conduit 2.

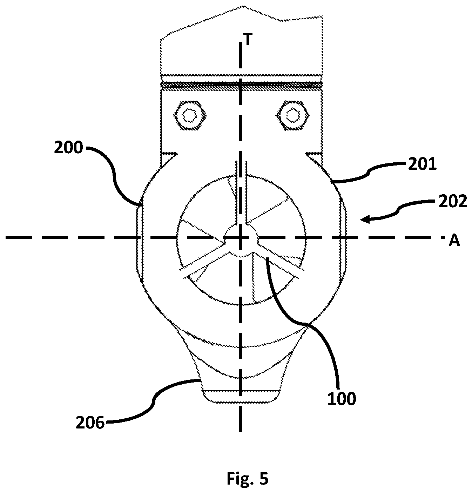

The turbine housing 200 encloses the turbine 100. The inner geometry of the housing 200, enclosing the turbine 100, may have a substantially cylindrical geometry. That is, the turbine 100 rotates within a cylindrical region. The housing 200 has first 203 and second 204 flow ends. Flow ends 203, 204 refer to the ends of the housing 200 where fluid enters or leaves the housing 200. The flow ends 203, 204 are aligned with the turbine 100. Fluid flowing through the housing 200 and the turbine 100 has a substantially linear flow path. The housing 200 has a length, wherein the length of the housing refers to the distance from the first flow end 203 to the second flow end 204. As shown in figure 5 the cross-section of the turbine housing 200 along the longitudinal axis L need not be circular (cylindrical geometry) as described above, in some instances the cross-section along the longitudinal axis L may have an extended portion 206 at the bottom most portion of the housing 200, the extended portion 206 being distal and opposite to the proximal portion 205. A non-circular geometry may enable the positioning of a sensor in the turbine housing 200 within the flow path of the fluid in the fluid conduit 2, but without impinging on the space required for the stator in the housing 200.

The outermost wall of the turbine housing 200 may be substantially cylindrical along the transversal axis T, that is it may have a circular cross-section. The outer wall 201 of the bottom portion 202 may have a circular cross-section along the transversal axis T of the housing 200. The outer diameter of the cross-section of the turbine housing 200 along the transversal axis may be less than about 50 mm.

This substantially cylindrical cross-section along the transversal axis allows the turbine housing 200 and therein the turbine 100 to be positioned within a pipe with a circular cross-section perpendicular to the flow of fluid. This is especially ideal where the turbine 100 and turbine housing 200 is to be mounted to an existing pipe or pipe section. An existing section of pipe may be difficult to access and a turbine housing 200 having a circular cross-section can be efficiently installed in to a bore, that is a circular hole, in to the existing pipe. Due to its cylindrical geometry along the transverse axis T, the turbine assembly 1 is receivable in a cylindrical bore. This also enables the turbine housing 200 to be more easily receivable through an aperture 501 in a valve member 500. Generally valve members used with fluid conduits have circular cross-sections and by providing a turbine housing 200 with a cylindrical geometry along its transversal axis T the turbine may efficient fit through the valve member 500. The cylindrical form along the transversal axis T also improves fluid flow around the turbine housing 200 within the fluid conduit 2.

The turbine housing 200 is connected to the connecting member 300 at the distal portion 205 of the housing 200. The distal portion 205 of the turbine housing 200 connects to the proximal portion 301 of the connecting member 300. The connecting member 300 may be a shaft formed element extending perpendicular to the longitudinal axis, L and the lateral axis A, of the turbine housing 200.

The distance between the proximal end 301 and the distal end 302 of the connecting member 300 is the length of the connecting member 300. The connecting member 300 has a length adapted such that the turbine may be positioned within a fluid conduit 2 and such that the distal end 302 remains at a position above each of the saddle clamp 400, the valve member 500 and the enclosure for the turbine housing 600 when the assembly is installed at a fluid conduit 2. The term above used herein refers to the distal end 302 being at a position distal to each of the: enclosure 600, valve 500 and saddle clamp 400 respectively, to the fluid conduit 2.

The turbine housing 200 may be permanently fixed to the connecting member 300. The connecting member 300 may be bonded to the turbine housing 200 with a bonding medium. The bonding medium may provide a solid retaining means for electrical cabling exiting the turbine housing 200.

The distal end 302 of the connecting member 300 is provided with a cap 303 for connecting the connecting member 300 to the enclosure 600. The cap 303 may comprise a thread such that it can be screwed to the enclosure 600. In such an arrangement the enclosure 600 comprises a corresponding thread. The cap 303 may comprise an electrical connector for connection to electrical cabling from the turbine 100 and to any devices requiring power from the turbine 100.

The turbine housing 200, and connecting member 300, may be rotatable with respect to a portion of the cap 303. The cap 303 may comprise a first portion comprising a threaded portion for connection to the enclosure 600, the cap may comprise a second portion rotatably fixed to the connecting member 300 and rotatable with respect to the first portion of the cap 303. In such an arrangement the alignment of the turbine housing 200 and the turbine 100 may be adjusted by turning the second portion of the cap 303 with respect to the first portion. This allows the turbine to be efficiently aligned within the fluid conduit 2 without needing to adjust the connection of the cap 303 to the enclosure 600.

The enclosure 600 is specifically adapted for enclosing the turbine housing 200 and sealing against the connecting member 300 such that fluid may not flow past the enclosure 600. The enclosure 600 has a proximal portion 601 connectable to the valve member 500. Fluid may flow through the proximal portion in to the enclosure 600 if the valve member 500 is open and there is fluid in the fluid conduit 2. The enclosure is provided with a sealing interface 603 at its distal portion 602 such that fluid may not flow past the enclosure 600. The sealing interface 603 may seal against the connecting member 300. The sealing interface 603 enables the connecting member 300 to slide past the interface 603. The sealing interface 603 may be an o-ring provided in a annular slot on an inner wall 604 of the enclosure 600. The distal portion 602 of the enclosure has a diameter less than the greatest diameter of the turbine housing 200. That is, the turbine housing 200 may not be fully withdrawn from the enclosure via the distal portion 602. The proximal portion 601 of the enclosure has a diameter greater than the greatest diameter of the turbine housing 200. The proximal portion 601 of the enclosure 600 may be substantially cylindrical and have an open proximal end. The distal portion 602 may have a substantially cylindrical form and have an open distal end. The proximal 601 and distal 602 portions of the enclosure may be co-axial. To form the proximal and distal regions of the enclosure 600 the outer wall 604 of the enclosure 600 may be provided with a step 605 from the proximal portion 601 having a diameter greater than the diameter of the turbine housing 200 to the distal portion 602 having a diameter less than the diameter of the turbine housing 200. The step 605 may be present in the internal wall 606 of the enclosure 600. The step 605 may form an abutment which restricts the upward movement of the turbine housing 200 out of the enclosure 600.

The outer wall 604 of the enclosure 600 may furthermore be provided with a threaded portion 607 such that the enclosure may be screwed to the valve member 500. The valve member 500 has a corresponding thread to form a fluidically tight seal.

The enclosure 600 is provided external to, that is outside of, the fluid conduit 2. The enclosure 600 fills with fluid during installation when the valve member 500 is opened. The enclosure 600 and the valve member 500 never provided within the fluid conduit 600. This enables a smaller bore hole to be drilled to the fluid conduit 2 during installation. As the hole need only accommodate the turbine housing 200 and not the enclosure 600.

The valve member 500 is connectable to the saddle clamp 400 and the enclosure 600. The valve member 500 is provided with an aperture 501 through which the turbine housing 200 may pass during installation. The valve member 500 may be closed such that fluid present on the fluid conduit 2 side of the valve member 500 may not pass the aperture 501. The valve member 500 may be a variety of known valve types such as a ball valve. The valve member 500 may be a commercially available, generic, valve member with a threaded proximal portion 502 and a threaded distal portion 502. Such valve members are widely available and generally used for connecting two fluid conduits together. Such commercially available valve members 500 may be used for connecting a saddle clamp surrounding a fluid conduit to a second fluid conduit. That is, for branching or tapping a fluid conduit.

The valve member 500 and the saddle clamp 400 may be comprised in the assembly 1 or may be separate and not part of the assembly 1. Ideally, the valve member 500 and the saddle clamp 400 are standard components and not specifically adapted for use with the turbine housing 200, enclosure 200, or connecting member 300 of the assembly 1. This reduces installation costs as the parts are generally accessible to plumbers or installers.

The turbine 100 and turbine housing 200 are rotatable with respect to the enclosure 600, the valve member 500 and or the fluid conduit 2. The turbine 100 and turbine housing 200 are rotatable around the axis defined by the connecting member 300 The turbine 100 and turbine housing 200 are rotatable in an axis orthogonal to the axis of the fluid conduit 2. Rotation enables the turbine 100 to be adjusted post installation to ensure that it is directly in-line with fluid flow in the conduit 2 and therefore the highest power generation is achievable. The turbine 100 and turbine housing 200 may be rotatable up to 360° such that the turbine 100 and turbine housing 200 such that the direction of fluid flow in the conduit 2 need not be constant. As the connecting member is connected to the turbine housing 200, the connecting member 300 rotates with turbine housing 200 and turbine 100. The connecting member 300 rotates therein with respect to the enclosure 600.

A process for installing a turbine for generating electrical power in to a fluid conduit comprising a fluid flow will now be described.

The process comprises arranging such as affixing a saddle clamp 400 to the fluid conduit 2. Thereafter a valve member 500 is connected to the distal portion of a saddle clamp 400. A drilling device is securely connected to the distal portion of the valve member 500. The valve is open such that the drilling tool of the drilling device can move past the valve and contact the wall of the fluid conduit 2. A bore/aperture is thereafter drilled in the wall of the fluid conduit 2. After the drilling of the aperture is complete the drilling tool may be retracted past the valve member 500. The valve member 500 may thereafter be closed such that fluid does not through from the valve member 500. The drilling device may be removed from the valve 500. The assembly 1 may thereafter be connected to the valve 500. The assembly 1 is connected to the valve 500 via the enclosure 600. The valve 500 may be opened such that fluid flows in to the enclosure 600 of the assembly 1. The turbine 100 and turbine housing 200 may be inserted past the open valve 500 through the aperture in the fluid conduit 2. To insert the turbine 100 and turbine housing 200 the connecting member 300 is slid downwards through the enclosure 600. The turbine 100 and turbine housing 200 are thereafter present within the flow of fluid in the fluid conduit 2 and may generate electrical power. The cap 303 of the connecting member 300 is connected and sealed to the enclosure 600. The angle of the turbine 100 with respect to the flow of fluid thought he conduit may be adjusted my rotating a portion of the cap 303 fixed to the connecting member 300, and therein the turbine housing 200, with respect to a second portion of the cap 303 connected and non-rotatable with respect to the enclosure 600.

The term hot-tapping refers to the installation of new conduits or devices to an existing fluid conduit pressurized with a fluid flow. The process detailed above is a hot-tapping process for the installation of a device for generating electrical power from a fluid flow.

Although, the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An assembly (1) for generating electrical power from a fluid flow being installable to a fluid conduit (2) comprising a fluid, the assembly (1) comprising
- a turbine (100) for generating power from the fluid flow, the turbine (100) provided within a turbine housing (200), the turbine (100) and turbine housing (200) being provided with a rotor and stator assembly such that rotation of the turbine (100) generates an electric power,
- a connecting member (300) having a proximal portion (301) attached to a distal portion (205) of the turbine housing (200) and a distal portion (302) comprising a cap (303),
- a separate enclosure (600) for housing the turbine (100) and the turbine housing (200), the enclosure (600) slidably receiving the connecting member (300) through a distal portion (602) of the enclosure (600), the cap (303) of the connecting member (300) being securable to the enclosure (600), wherein the enclosure (600) is connectable to a valve member (500), the valve member (500) provided with an aperture (501) through which the turbine housing (200) may pass, the valve member (500) and the enclosure (600) for provision external to the fluid conduit (2) comprising the fluid.

2. The assembly (1) according to claim 1, wherein the valve member (500) is connectable to a saddle clamp (400) for securing the assembly (1) to the fluid conduit (2).

3. The assembly (1) according to claim 1 or 2, wherein the enclosure (600) and the valve member (500) are external to the fluid conduit (2) during operation.

4. The assembly (1) according to any of claims 1 to 3, wherein the turbine (100) and turbine housing (200) are rotatable with respect to the enclosure (600), the valve member (500) and/or the fluid conduit (2) around an axis defined by the connecting member (300).

5. The assembly (1) according to any of claims 1 to 4, wherein the outer wall of the turbine housing (200) has a substantially circular cross-section along a transversal axis (T).

6. The assembly (1) according to any of claims 1 to 5, wherein the assembly (1) comprises the valve member (500).

7. The assembly (1) according to claim 6, wherein the enclosure (600) is separate to the valve member (500), and wherein a proximal portion (601) of the enclosure (600) is connectable to a distal portion of the valve member (500) via a threaded interface.

8. The assembly (1) according to any of claims 2 to 7, wherein the assembly (1) comprises the saddle clamp (400) having an opening at its upper portion for receiving the valve member (500).

9. The assembly (1) according to any of claims 1 to 8, wherein the enclosure (600) comprises a proximal portion (601) having a diameter greater than the greatest diameter of the turbine housing (200) and wherein the distal portion (602) of the enclosure (600) has a diameter less than the greatest diameter of the turbine housing (200), and wherein the distal portion (602) of the enclosure (600) is provided with a sealing interface (603) to seal against the connecting member (300) such that fluid cannot flow to the distal portion (602) of the enclosure (600).

10. A method for installing the assembly (1) of any of claims 1 to 9 to a fluid conduit (2) comprising a fluid comprising:
- arranging a saddle clamp (400) at the fluid conduit (2),
- connecting the valve member (500) to a distal portion of the saddle clamp (400),
- connecting a drilling device to the valve member (500) for drilling an aperture in the fluid conduit (2),
- drilling an aperture in the fluid conduit (2) with the drilling device,
- attaching the enclosure (600) of the assembly (1) to the valve member (500),
- inserting the turbine housing (200) of the assembly in to the flow of fluid in the fluid conduit (2) via the valve member (500) by sliding the connecting member (300) and turbine housing (200) with respect to the enclosure (600) such that the turbine (100) and turbine housing (200) are within the flow of fluid in the conduit (2), and,
- connecting the cap (303) of the connecting member (300) of the assembly (1) to the enclosure (600) to secure the turbine (100) and turbine housing (200) in place.

11. The method according to claim 10, comprising adjusting the angle of the turbine (100) and turbine housing (200) with respect to the direction of the flow of fluid by rotating a portion of the cap (303) fixed to the connecting member (300) with respect to a portion of the cap (303) fixed and non-rotatable with respect to the enclosure (600).

12. A method of generating electrical energy from a fluid flow comprising installing the assembly according to any of claims 1 to 9 via the method according to claims 10 or 11 and further comprising:
- generating electrical power via the rotation of the turbine (100) by a fluid flow in the fluid conduit (2).

## Patentansprüche

1. Anordnung (1) zum Erzeugen elektrischer Energie aus einem Fluidstrom, die an einer Fluidleitung (2) installierbar ist, die ein Fluid umfasst, wobei die Anordnung (1) Folgendes umfasst
- eine Turbine (100) zum Erzeugen von Energie aus dem Fluidstrom, wobei die Turbine (100) in einem Turbinengehäuse (200) bereitgestellt ist, wobei die Turbine (100) und das Turbinengehäuse (200) mit einer Rotor- und Statoranordnung bereitgestellt sind, so dass eine Drehung der Turbine (100) eine elektrische Energie erzeugt,
- ein Verbindungselement (300) mit einem proximalen Abschnitt (301), der an einem distalen Abschnitt (205) des Turbinengehäuses (200) angebracht ist, und einem distalen Abschnitt (302), der eine Kappe (303) umfasst,
- eine getrennte Kapselung (600) zum Unterbringen der Turbine (100) und des Turbinengehäuses (200),
wobei die Kapselung (600) das Verbindungselement (300) verschiebbar durch einen distalen Abschnitt (602) der Kapselung (600) aufnimmt, wobei die Kappe (303) des Verbindungselements (300) an der Kapselung (600) befestigbar ist, wobei die Kapselung (600) mit einem Ventilelement (500) verbindbar ist, das Ventilelement (500) mit einer Öffnung (501) bereitgestellt ist, durch die das Turbinengehäuse (200) durchführen kann, das Ventilelement (500) und das Gehäuse (600) zur Bereitstellung außerhalb der Fluidleitung (2), die das Fluid umfasst, gedacht sind.

2. Anordnung (1) nach Anspruch 1, wobei das Ventilelement (500) zum Befestigen der Anordnung (1) an der Fluidleitung (2) mit einer Sattelklemme (400) verbindbar ist.

3. Anordnung (1) nach Anspruch 1 oder 2, wobei die Kapselung (600) und das Ventilelement (500) während des Betriebs außerhalb der Fluidleitung (2) sind.

4. Anordnung (1) nach einem der Ansprüche 1 bis 3, wobei die Turbine (100) und das Turbinengehäuse (200) in Bezug auf die Kapselung (600), das Ventilelement (500) und/oder die Fluidleitung (2) um eine durch das Verbindungselement (300) definierte Achse drehbar sind.

5. Anordnung (1) nach einem der Ansprüche 1 bis 4, wobei die Außenwand des Turbinengehäuses (200) entlang einer Querachse (T) einen im Wesentlichen kreisförmigen Querschnitt aufweist.

6. Anordnung (1) nach einem der Ansprüche 1 bis 5, wobei die Anordnung (1) das Ventilelement (500) umfasst.

7. Anordnung (1) nach Anspruch 6, wobei die Kapselung (600) von dem Ventilelement (500) getrennt ist und wobei ein proximaler Abschnitt (601) der Kapselung (600) mittels einer Gewindegrenzfläche (500) mit einem distalen Abschnitt des Ventilelements verbindbar ist.

8. Anordnung (1) nach einem der Ansprüche 2 bis 7, wobei die Anordnung (1) die Sattelklemme (400) mit einer Aussparung an ihrem oberen Abschnitt zum Aufnehmen des Ventilelements (500) umfasst.

9. Anordnung (1) nach einem der Ansprüche 1 bis 8, wobei die Kapselung (600) einen proximalen Abschnitt (601) umfasst, der einen Durchmesser aufweist, der größer ist als der größte Durchmesser des Turbinengehäuses (200), und wobei der distale Abschnitt (602) der Kapselung (600) einen Durchmesser aufweist, der kleiner ist als der größte Durchmesser des Turbinengehäuses (200), und wobei der distale Abschnitt (602) der Kapselung (600) mit einer Dichtungsgrenzfläche (603) bereitgestellt ist, um gegen das Verbindungselement abzudichten (300), so dass Fluid nicht zu dem distalen Abschnitt (602) der Kapselung (600) fließen kann.

10. Verfahren zum Installieren der Anordnung (1) nach einem der Ansprüche 1 bis 9 an einer Fluidleitung (2), die ein Fluid umfasst, umfassend:
- Anordnen einer Sattelklemme (400) an der Fluidleitung (2),
- Verbinden des Ventilelements (500) mit einem distalen Abschnitt der Sattelklemme (400),
- Verbinden einer Bohrvorrichtung mit dem Ventilelement (500) zum Bohren einer Öffnung in der Fluidleitung (2),
- Bohren einer Öffnung in der Fluidleitung (2) mit der Bohrvorrichtung,
- Anbringen der Kapselung (600) der Anordnung (1) an dem Ventilelement (500),
- Einsetzen des Turbinengehäuses (200) der Anordnung in den Fluidstrom in der Fluidleitung (2) über das Ventilelement (500) durch Verschieben des Verbindungselements (300) und des Turbinengehäuses (200) in Bezug auf die Kapselung (600) derart, dass sich die Turbine (100) und das Turbinengehäuse (200) innerhalb des Fluidstroms in der Leitung (2) befinden, und
- Verbinden der Kappe (303) des Verbindungselements (300) der Anordnung (1) mit der Kapselung (600), um die Turbine (100) und das Turbinengehäuse (200) ortsfest zu sichern.

11. Verfahren nach Anspruch 10, umfassend das Einstellen des Winkels der Turbine (100) und des Turbinengehäuses (200) in Bezug auf die Richtung des Fluidstroms durch Drehen eines Abschnitts der Kappe (303), der an dem Verbindungselement (300) fixiert ist, in Bezug auf einen Abschnitt der Kappe (303), der fixiert ist und in Bezug auf die Kapselung (600) nicht drehbar ist.

12. Verfahren zum Erzeugen elektrischer Energie aus einem Fluidstrom, umfassend das Installieren der Anordnung nach einem der Ansprüche 1 bis 9 mittels des Verfahrens nach den Ansprüchen 10 oder 11 und weiter umfassend:
- Erzeugen von elektrischer Energie mittels der Drehung der Turbine (100) durch einen Fluidstrom in der Fluidleitung (2).

## Revendications

1. Ensemble (1) pour générer de l'énergie électrique à partir d'un écoulement de fluide pouvant être installé sur un conduit de fluide (2) comprenant un fluide, l'ensemble (1) comprenant
- une turbine (100) pour générer de l'énergie à partir de l'écoulement de fluide, la turbine (100) étant prévue à l'intérieur d'un carter de turbine (200), la turbine (100) et le carter de turbine (200) étant pourvus d'un ensemble rotor et stator de sorte qu'une rotation de la turbine (100) génère une énergie électrique,
- un élément de liaison (300) présentant une partie proximale (301) attachée à une partie distale (205) du carter de turbine (200) et une partie distale (302) comprenant un capuchon (303),
- une enceinte séparée (600) pour loger la turbine (100) et le carter de turbine (200),
l'enceinte (600) recevant de manière coulissante l'élément de liaison (300) à travers une partie distale (602) de l'enceinte (600), le capuchon (303) de l'élément de liaison (300) pouvant être fixé à l'enceinte (600), dans lequel le l'enceinte (600) peut être reliée à un élément vanne (500), l'élément vanne (500) étant pourvu d'une ouverture (501) à travers laquelle le carter de turbine (200) peut passer, l'élément vanne (500) et l'enceinte (600) étant destinés à être disposés à l'extérieur du conduit de fluide (2) comprenant le fluide.

2. Ensemble (1) selon la revendication 1, dans lequel l'élément vanne (500) peut être relié à un collier de serrage (400) pour fixer l'ensemble (1) au conduit de fluide (2).

3. Ensemble (1) selon la revendication 1 ou 2, dans lequel l'enceinte (600) et l'élément vanne (500) sont externes au conduit de fluide (2) pendant le fonctionnement.

4. Ensemble (1) selon l'une quelconque des revendications 1 à 3, dans lequel la turbine (100) et le carter de turbine (200) peuvent tourner par rapport à l'enceinte (600), à l'élément vanne (500) et/ou au conduit de fluide (2) autour d'un axe défini par l'élément de liaison (300).

5. Ensemble (1) selon l'une quelconque des revendications 1 à 4, dans lequel la paroi externe du carter de turbine (200) présente une section sensiblement circulaire le long d'un axe transversal (T).

6. Ensemble (1) selon l'une quelconque des revendications 1 à 5, dans lequel l'ensemble (1) comprend l'élément vanne (500).

7. Ensemble (1) selon la revendication 6, dans lequel l'enceinte (600) est séparée de l'élément vanne (500), et dans lequel une partie proximale (601) de l'enceinte (600) peut être reliée à une partie distale de l'élément vanne (500) via une interface filetée.

8. Ensemble (1) selon l'une quelconque des revendications 2 à 7, dans lequel l'ensemble (1) comprend le collier de serrage (400) présentant une ouverture au niveau de sa partie supérieure pour recevoir l'élément vanne (500).

9. Ensemble (1) selon l'une quelconque des revendications 1 à 8, dans lequel l'enceinte (600) comprend une partie proximale (601) présentant un diamètre supérieur au diamètre le plus grand du carter de turbine (200) et dans lequel la partie distale (602) de l'enceinte (600) présente un diamètre inférieur au diamètre le plus grand du carter de turbine (200), et dans lequel la partie distale (602) de l'enceinte (600) est pourvue d'une interface d'étanchéité (603) pour assurer l'étanchéité contre l'élément de liaison (300) de sorte que du fluide ne peut pas s'écouler vers la partie distale (602) de l'enceinte (600).

10. Procédé d'installation de l'ensemble (1) selon l'une quelconque des revendications 1 à 9 sur un conduit de fluide (2) comprenant un fluide comprenant :
- l'agencement d'un collier de serrage (400) au niveau du conduit de fluide (2),
- la liaison de l'élément vanne (500) à une partie distale du collier de serrage (400),
- la liaison d'un dispositif de perçage à l'élément vanne (500) pour percer une ouverture dans le conduit de fluide (2),
- le perçage d'une ouverture dans le conduit de fluide (2) avec le dispositif de perçage,
- l'attachement de l'enceinte (600) de l'ensemble (1) à l'élément vanne (500),
- l'insertion du carter de turbine (200) de l'ensemble dans l'écoulement de fluide dans le conduit de fluide (2) via l'élément vanne (500) en faisant coulisser l'élément de liaison (300) et le carter de turbine (200) par rapport à l'enceinte (600) de sorte que la turbine (100) et le carter de turbine (200) se trouvent à l'intérieur de l'écoulement de fluide dans le conduit (2), et
- la liaison du capuchon (303) de l'élément de liaison (300) de l'ensemble (1) à l'enceinte (600) pour fixer en place la turbine (100) et le carter de turbine (200).

11. Procédé selon la revendication 10, comprenant le réglage de l'angle de la turbine (100) et du carter de turbine (200) par rapport à la direction de l'écoulement de fluide en faisant tourner une partie du capuchon (303) fixée à l'élément de liaison (300 ) par rapport à une partie du capuchon (303) fixée et non rotative par rapport à l'enceinte (600).

12. Procédé de génération d'énergie électrique à partir d'un écoulement de fluide comprenant l'installation de l'ensemble selon l'une quelconque des revendications 1 à 9 via le procédé selon les revendications 10 ou 11 et comprenant en outre :
- la génération d'énergie électrique via la rotation de la turbine (100) par un écoulement de fluide dans le conduit de fluide (2).
